# EUROPEAN PATENT SPECIFICATION

(11) **EP 3 226 698 B1**
(45) Date of publication and mention of the grant of the patent: **24.04.2019**
(21) Application number: 15790986.2
(22) Date of filing: 09.11.2015
(51) Int. Cl.: A23G 9/26, A23G 9/48, A23G 9/34, A23G 9/50, B26D 3/08, B26D 7/06, B26D 7/10

(54) **ASSEMBLY AND METHOD FOR CUTTING COATINGS**
VORRICHTUNG UND VERFAHREN ZUM SCHNEIDEN VON BESCHICHTUNGEN
ENSEMBLE ET PROCÉDÉ DE DÉCOUPE D'ENROBAGES

(30) Priority: 02.12.2014 US 201462086324 P
(43) Date of publication of application: 11.10.2017
(73) Proprietor: Nestec S.A., 1800 Vevey (CH)
(72) Inventor: AMEND, Thomas Aloisius Valentinus, Bakersfield, CA 93311 (US)
(74) Representative: Elleby, Gudrun
(86) International application number: PCT/EP2015/076058
(87) International publication number: WO 2016/087160

(56) References cited:
- WO-A1-2013/007493
- WO-A1-2013/064376
- WO-A2-2012/156539
- US-A- 1 960 934
- US-A- 1 966 048
- Anonymous: "Magnum (ice cream)", Wikipedia, the free encyclopedia , 22 January 2014 (2014-01-22), XP002751905, Wayback machine Retrieved from the Internet: URL:http://web.archive.org/web/20140122174 044/http://en.wikipedia.org/wiki/Magnum_(i ce_cream) [retrieved on 2015-12-02]

## Description

### Field of the invention

The present invention is defined by the claims and relates to an assembly and a method for cutting a coating of a frozen confection, in particular for automatically applying cutting lines to a confectionery coating, especially a gel coating, during the production on an industrial manufacturing line.

### Background

Frozen confectionery products consisting entirely of frozen gel or comprising a frozen gel coating are known and are popular in particular with children.

One example is a frozen confectionery product comprising a core consisting of a frozen confection said core being at least partially coated with a frozen flexible edible gel coating or layer. Such a frozen confectionery product is sold by Nestlé Thailand under the brand name "Eskimo Monkey". This product comprises an ice-cream core being coated with a frozen flexible edible gel layer. This gel layer can be peeled off by the consumer and eaten separately. Since the gel is resistant to liquefaction, even in the defrosted state, the product parts that have been peeled off by the consumer remain intact without melting and dripping. To facilitate the peeling, four longitudinal cutting lines are provided in the gel layer, so that four flaps of peel can be peeled off. One thereby achieves a banana-style peeling effect.

WO2013064376 discloses a product with a core of ice cream which is coated with at least two visually distinct layers of jelly. The patent application mentions that when the two gel layers are frozen in two separate steps, they show little adhesion between each other, so that they can be peeled off separately by a consumer. However, due to the very close characteristic, both jelly shell and core, or the different layers of jelly, can be found to adhere to each other and may be difficult to peel apart from each other during consumption in particular for children who enjoy these kinds of composite frozen confectionery products. For example, thinner layers of coating may be more difficult to peel off. To facilitate the peeling of the gel coating it is important that the product has well defined pre-cuts in the gel coating.

To cut spiral cutting line into the gel coating, a cutting tool as described in the International Patent Application PCT/CN11/077465 filed on July 22nd, 2011 can be used.

When manufacturing a shell and core products on a standard industrial production line in a first production step, a liquid, jelly-like material is dosed into a mold cavity. As the mold is suspended into a cold brine solution, the jelly material starts to solidify and freeze. Once a thin layer of the jelly material has become frozen, the remaining unfrozen material is sucked out of the mold, creating a shell of frozen jelly. Into this jelly-shell, the core material, such as ice cream mix, is dosed and allowed to freeze. Prior to full completion of freezing, a stick is inserted and the product is completely frozen. Subsequently, the outside of the mold is sprayed with a warm liquid to soften or melt a thin surface-layer of the product. Using grippers the product is pulled out of the mold by its stick. The product, suspended from the grippers, is then transported towards other process steps, and finally to a wrapping machine.

To manufacture a peelable stick, an additional process steps is included to apply of cuts to the jelly-shell. These cuts are essential for a proper working of the peelable effect, which means that the consumer can easily pull down slices of jelly material using his or her teeth. The role of the cut lines is to guide the separation of the jelly to form e.g. banana-type slices. Without the cut lines, the jelly skin would rather be torn-off in pieces, which does not reflect a banana-type peeling experience. The industrial application of such cut lines, however, constitutes a technical challenge.

CN200976814 describes frozen confection products characterized by an ice cream core and a gel-like shell on various overall shapes. The shell part can be peeled off by the consumer and consumed. The utility model does not specify how to apply the cut lines.

WO2014/079848 specifies compositional details of the shell material that can be used to create a gel-type shell that can be subsequently sliced and displays graphics of a frozen confection exhibiting a spiral-type peeling option. The patent mentions a cutting action to apply lines of weakness to guide the spiral-type peeling action. The cut is applied by two set of blades, which are pressed from opposite sides against the surface in a horizontal movement. During the process, the frozen confection is vertically suspended by the stick via grippers.

While other shapes of cut lines than a spiral can principally be manufactured using that process, it has been found this procedure has limitations when applied to vertical cut lines for generally cylinder-shaped products. In particular, the process meets limitations if more than two cut lines, such as 3, 4 or more lines, are to be produced with the lines evenly distributed around the circumference of the product. The problems arise from the fact that on modern production lines, the products are arranged in rows of typically 4 to 20 or more products side-by-side. The products are suspended from their stick and there is little space between the products available to arrange cutting mechanisms in the gap between adjacent frozen confections. Even if the gap is large enough to accommodate such mechanisms, such a procedure would require a complex mechanical installation.

One problem with the current cutting mechanisms is that it provides mechanical stress on the production line when products are moved up and down.

Furthermore, for frozen confection products in the form of a stick with longitudinal cut lines, it was found that the products tend to remain stuck in the cutter or they that may break apart during the process of cutting of the coating.

None of the documents describe a solution to improve the cutting of a gel layer of a frozen confection.

There is therefore a need to improve on the cutting of the gel coatings both for single and composite products with multiple gel layers.

### Object of the invention

It is the objective of this invention to provide a tool and a method to apply such cut lines on the frozen confection coating while avoiding the aforementioned disadvantages.

### Summary of the invention

It was found that a combination of two or more side knives statically fixed on a frame in combination with a gripper specially designed to handle the cutting step provides a solution to the above-discussed drawbacks when applied in combination with a specific step of warming the product shell beyond the requirements of extraction from the mould.

Accordingly, the present invention relates to an assembly for cutting a coating of a frozen confection comprising a coating cutting tool comprising
a frame defining a product void for receiving a frozen confection at least partly coated and comprising a stick,
a product funnel to direct the product to a central position in the product void,
a set of side knives comprising at least 2 knives statically fixed on opposite sides of the product void and
at least one gripper to hold the product by the stick during the cutting of the coating, said gripper comprising a locking mechanism that limits the distance by which the stick can be pushed into the gripper and prevents the frozen confection's edible portion from touching the gripper when pressure is applied onto the product by the static knives.

In a second aspect, the invention relates to a method for cutting a coating on a frozen confection comprising
providing an assembly according to at least claim 1,
providing a frozen confection being at least partly coated and comprising a stick,
preparing the product for the cutting by heating the coating of the frozen confection to soften it,
fixing the stick of the frozen confection by means of the gripper,
inserting the frozen confection into the product void by providing a relative movement between the cutting tool and the product while cutting coating of the frozen confection by means of the static knives.

### Brief description of the figure

Fig. 1 shows schematically a coating cutter assembly consisting of static knives and end knife.
Fig. 2 shows schematically a coating cutter with a set of knives including an end knife which moves up and down for cutting. The product is static. The end knife arrangement (not shown) is as in Fig. 1.
Fig. 3 shows schematically a coating cutter with a plunger for clearing stuck products.
Fig. 4 shows schematically a coating cutter mounted on a rail to remove the knives to clear out stuck products.
Fig. 5a depicts the stick of the product locked in the gripper at the extraction step (left), creating a first pressmark and at the cutting step (right), creating a second pressmark (both side view)
Fig 5b shows a stick with 2 pressmarks on it as it appears after the extraction and cutting step.

### Detailed description of the invention

In the present context the coating on the frozen confectionery product is a flexible coating. In a preferred embodiment of the invention the coating is a gel coating.

The gripper in the present context is a device used to hold the product by its stick during extraction and subsequent steps of product manipulation. The gripper according to the invention is provided with a blocking member. The blocking member is a small metal device, such as a plate, installed inside the gripper at a location such that the movement of the stick further into the gripper is restricted to a defined, aximal depth of insertion of the stick. The specific design of the blocking member depends on the geometry of the gripper model used.

According to the invention, the frozen confection comprises a stick, such as a wooden stick or a stick made from plastic, and in a preferred embodiment it is manufactured on a standard industrial molding line for frozen stick products using a procedure called shell & core process and well known by a person skilled in the art, characterized by first filling a jelly material into a mold and partially freezing the jelly material. The unfrozen jelly material at the center of the mold is then sucked out and the core material is filled into the void. A stick is then inserted into the half frozen core material and the product is deep frozen in the mold.

In a next step, the products on standard industrial lines are extracted from the mold by pulling them out by their stick using grippers attached to an automatic handling system.

Prior to extraction, the mold must be warmed sufficiently to melt a thin layer of product to release it from the mold. This is typically done by spraying a warm liquid onto the outer surface of the mold until a thin product layer has molten. For standard products, other than the product subject of this invention, great care is given to adjust the temperature of said liquid to just warm enough to allow extraction. Excessive warming would cause further unnecessary melting of the product and result in an undesired loss of product weight.

It has been found surprisingly that for the product subject to this invention, a higher than normally used temperature of the liquid can be used without product loss and while providing considerable benefits for the subsequent cutting step. As mentioned, in standard industrial practice, the liquid used to warm up the mold prior to extraction is kept at a temperature just sufficiently warm to allow product extraction, thereby avoiding product losses. Typically, the temperature of said liquid is in the range, but not limited to between + 10 to +30 °C and depends among other factors on the duration of spraying and the speed of the line. According to this invention the temperature to which the coating is warmed up is higher than what is need for releasing the product from a mold, and sufficient to soften the coating.

The cutting step comprises forcing the product through a set of knives and the force required largely depends on the firmness of the shell to be cut. The colder the shell, the harder it is to cut, since more water is frozen in the shell, resisting the cutting. In a preferred embodiment the coating cutting assembly comprises an end cutter to provide cuts at the end of the product.

It was found that the typical industrial practice of a minimal warming of the mold prior to extraction does not soften the shell enough as to allow a smooth cutting, but the products tend to remain stuck inside the cutting assembly.

In a preferred embodiment, the temperature of the liquid used is increased to warm the outside of the mold prior to extraction to a degree that provides sufficient melting of the ice in the shell to reduce firmness to a degree that allows cutting without applying excessive force. With excessive force is meant a force that would cause breaking of the stick by which the product is forced into the cutting assembly or a force that would cause the product getting stuck in the cutting assembly and break apart during extraction or a force that exceeds the maximum pressure that the production line mechanism can safely provide to push the product into the cutting assembly.

The temperature of said liquid is therefore increased to a level, but not limited to between 20 to 80 °C, and is typically more than minimally required for extraction of a product which is not subjected to the cutting step. For example, for a shell or coating and core product, which is not subjected to a cutting step and where the temperature of the liquid used to warm up the mould is at 20 °C, the temperature is raised to 40 °C if the coating and core product has a gel coating and is subjected to a cutting step.

While such a temperature would cause excessive melting and product loss in a regular shell & core frozen confection product, other than the products subject of this invention, the use of a jelly shell avoids such problems. This is due the properties of a jelly material to retain its shape and integrity at temperatures above the freezing point of water. Consequently, a product having a gel coating can be warmed up by the liquid used to warm the mold to an extent not possible for a regular frozen confection without considerable product loss. The typical properties of gel with regard to integrity at elevated temperatures and the increased temperature of the liquid used to warm the mold represent a prerequisite of the cutting step with static knives. Therefore, in a preferred embodiment of the invention the product is molded in a mold and the mold is warmed up by spraying warm liquid onto the outside to a degree that allows both to extract the product from the mold and softens the gel coating enough to allow smooth cutting.

In another preferred embodiment, the minimal temperature of the liquid sprayed against the mold is used to just allow extraction of the product but a second warming step is added for the shell to soften prior to cutting. This second step consists in dipping the product into a liquid, such as water, of a temperature sufficiently warm to allow softening of the shell. The temperature of said liquid is in the range of 20 to 95 °C and is adjusted to give sufficient softening during the time of the dipping step. Alternatively, the shell can also be warmed by blowing warm air against the product or keeping the product sufficiently long in a warm or ambient environment prior to cutting.

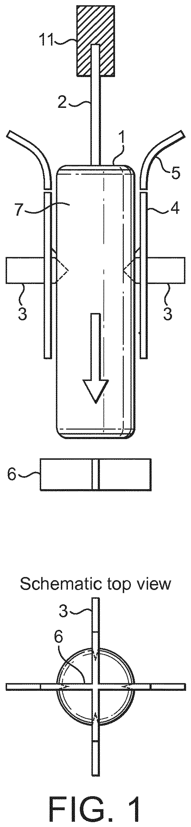

After warming of the mold by spraying water against its outer surface, the product is pulled out from the mold and inserted into the product void (7) of the cutter, see Fig. 1. This process is supported by the inlet funnel (5) which aligns such products that are shifted sideways with regard to the product void over the knives. The alignment is further supported by side guides (4) which encircle the product and maintain its aligned position. The product is further lowered until the side knives (3) cut into the shell. When the product reaches the end knives (6), it is further pushed into said knives to a depth corresponding to the thickness of the gel layer. Both side knives and end knife fully section the gel layer preferably up to the core material. The end and side knives are aligned to generate a continuous cutting line by both knives, see schematic top view of Fig. 1. Now the product is pulled out from the cutter and proceeds to the wrapping machine.

In this process, the holder by which the product is fixed during those manipulations plays an important role. In industrial practice fixing of a product is typically done through grippers which are lowered down to the molds for extraction and which engage with the sticks. During this step, the grippers are lowered such that the stick reaches into the grippers for a few mm, typically between 4 and 20 mm. When the grippers are retracted to extract the product, a spring-loaded locking mechanism of the grippers keeps the stick firmly fixed.

It is a typical property of such gripper systems that a stick can easily be pushed into the gripper without restrictions and with only little resistance to various depths and up to a depth when the product tip located at the end of the stick gets pressed against the gripper. This occurring, the concerned end of the product may get damaged to an unacceptable degree.

When the product is subjected to the cutting step and pushed into the cutting assembly, it needs to overcome the resistance of the jelly layer towards cutting. The required force is sufficient to cause the stick to slide into the gripper and the product tip located at the end of the stick being pushed against the gripper, resulting in inacceptable product damage.

According to the invention, it has been found that the movement of the sticks inside the gripper (11) can be restricted to a level that does not interfere with extraction of the product while effectively preventing the product end being pushed against the gripper during the cutting step. This restriction of movement is achieved by mounting a blocking member on the grippers that prevents excessive movement of the stick into the grippers.

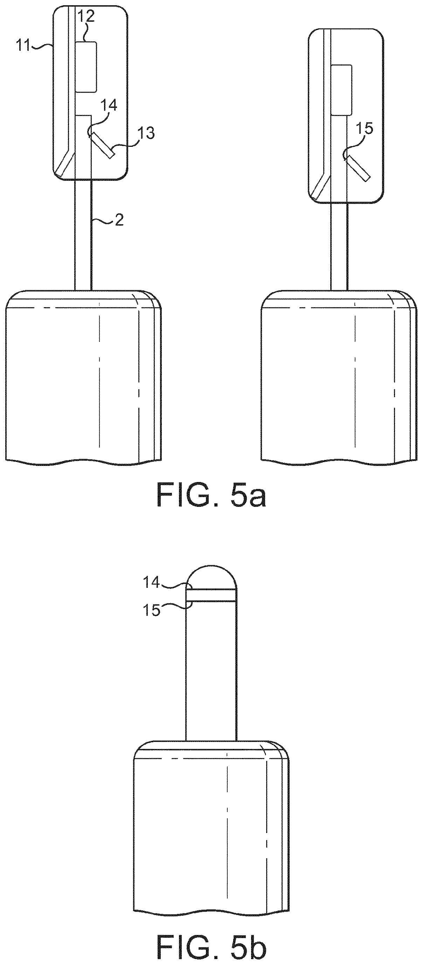

In a typical sequence of events according to our invention, the modified grippers engage with the sticks and the products get extracted, see Fig. 5a. The stick (2) gets secured in the gripper (11) for extraction by locking mechanism (13) in a position as shown in the left graphic of Fig. 5a. When the product is pushed into the cutter, the cutting resistance causes the product to slip upward until it is stopped by blocking member (12). The locking mechanism (13) is securing the stick at a different position on the stick now (fig. 5a right)

This procedure and the members involved typically leave a visible trace of the sticks. In an example of a frozen confection having inserted a standard wooden stick, those traces can be detected visually on the stick as 2 grooves oriented perpendicular to the axis of the stick. The formation of those grooves can be explained as follows: During the product extraction from the mold, the locking mechanism of the gripper leaves a first pressmark on the stick (14, fig 5a left). When the product is pushed into the coating cutting tool, the stick slips a few mm further into the grippers until it is stopped by the blocking member (12). Consequently, the position of the stick with regard to the locking mechanism (13) has changed and the new position leaves another press mark on the stick, which is parallel to the first one (15, fig 5a right). The typical marking of the procedure according to our invention consists therefore of two parallel pressmarks (14, 15, Fig. 5b) on the stick with a distance between the two pressmarks of 0.5 mm to 20 mm, more typically between 3 and 10 mm.

In a preferred embodiment of the invention the position of the set of side knives and the end knife are arranged such that the cutting lines on side of the products and cutting lines at the end of the product are aligned. This allows e.g. peels running from the top of the product and along the sides to be formed. For example, a banana type peel can be made. The cutting lines of the side and top cut may be aligned so that they are directly abutting and form a common groove in the coating or may be positioned with a space or abutting however still allowing a continuous peel to be formed when the top coating is being pulled.

Further in the present context a frame is a structure or housing onto which the side knives are mounted and which defines the void. The cutting coating assembly in a preferred embodiment comprises a side guide. The frame may comprise an inlet funnel and a side guide. The inlet funnel ensures that products which are not perfectly centred above the set of side knives become aligned prior to be inserted into said set of side knives. The side guide for cylindrical products is preferably a tubular shaped member which keeps the product centred during the cutting step. It helps to achieve equal cutting depths of the knives.

The side knives are preferably blades of metal. The preferred thickness of the blades is from 0.5 to 5 mm for that part of the blade that is inserted into the coating, with the cutting edge being a sharp edge.

The side knives can have a pointed tip or a round tip with one side of the knife sharpened and the other one dull or both sides sharpened. Further in the present context an end knife is a knife which may have one or more cutting blades. In a preferred embodiment the end knife has 2 to 6 blades arranged in a cross or a star.

According to the method of the invention, the product is inserted into the fixed coating cutting tool frame, thereby providing the cuts.

The present invention is particular advantageous for cutting gel coating along the products axis. In a preferred embodiment the coating cutter has a first set of side knives to cut the coating of a cylindrical product along its longitudinal axis.

When the side knives are engaged in the cutting position, the cut reaches through the full thickness of the coating to the core part of the product

In order to remove a product blocked by the knives in the coating cutter, the coating cutter may comprise a movable plunger which preferably may be mounted on the frame to assist in the release of the frozen confection from the knife or knives of the coating cutter.

In the present context a gel coating may be a layer of gel which completely or partly covers a frozen confectionery core.

Further in the present context unless otherwise indicated % of a component means the % of weight based on the weight of the composition, i.e. weight/weight %.

In a preferred embodiment of the invention the gel coating has a total solid content from 20 to 45% based on weight of the gel (wt) and comprises 0.2 to 2 % wt of a gelling agent or combination of gelling agents, more preferably from 0.3 to 1.5% wt of gelling agent or agents. The solid content and the gelling agent provide a gel coating which is both flexible and resilient enough that it can be peeled off the frozen confection core or from other gel coatings without breakage.

Preferably the gel coating comprises gelling agent selected from the group consisting of konjac, carrageenan, xanthan, locust bean gum, gellan gum, pectins, alginates, agar, gelatine and starch or a combinations thereof.

The gel coating composition of the present invention may further include one or more additional ingredients such as flavors, sweeteners, colorants, setting salts, acids, buffer salts or a combination thereof.

Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the flavors, sweeteners and colorants will vary greatly and will depend on such factors as potency of the sweetener, desired sweetness of the product, level and type of flavor used and cost considerations. Combinations of sugar and/or sugarless sweeteners may be used.

In a preferred embodiment of the frozen confectionery product the at least one gel coating comprises 25 to 45 % wt of sweetener, preferably from 30 to 43 % wt. Advantageously, the sweetener is sucrose or glucose syrup or a combination thereof. In a further preferred embodiment of the invention, the sweetener consists of 15% wt sugar and 18% wt glucose syrup.

The frozen confectionery product according to the invention may comprise one or more additional gel coating(s) on top of or beneath the gel coating, which additional gel coatings at least partly overlaps with the other gel coating.

The frozen confection product that may be obtained with the method according to the invention may be provided with at least two cutting lines allowing peeling off the gel-coating at least partially. The cutting line does not necessarily have to extend through the complete gel coating. In particular, according to one embodiment of the invention, it is possible that the depth of the cutting line or lines corresponds to the thickness of an outer gel layer. In this case, the gel coating can be peeled off partially, i.e. only the outer gel layer can be peeled off, while the inner gel layer, which is not provided with any cutting lines, remains intact.

According to a preferred embodiment of the invention, several cutting lines extending longitudinally across the gel coating are provided, so that the coating can be peeled off by pulling down stripes, similar to peeling a banana. As mentioned above, it is possible that all of the layers constituting the coating or only an outer layer or several outer layers are peeled off.

It is further preferred that the product comprises a stick having one portion which is inserted into the core and another portion by which the product can be handled and pushed in the coating cutter. Further, this allows easy handling of the product during manufacturing and consumption. The consumer can hold the stick with one hand, and peel off the gel layer with the other hand or using the teeth. Alternatively it is also possible to make products without a stick, for example in a dome shape or in a shape imitating the shape of a fruit such as an apple or a pear. These products can then be consumed as a dessert using a plate and a spoon.

According to a preferred embodiment of the invention, the gel layer comprises one or more gelling hydrocolloids, in particular a polyanionic gelling hydrocolloid. This leads to the desired consistency and peelablity. Gelling properties can be achieved by various stabilisers and combinations thereof. An overview of stabilisers used in ice cream and indications on its gelling properties can be found in literature such as "Ice Cream, Sixth Edition, R.T. Marshall, H. D. Goff, R.W. Hartel eds., Kluwer Academic/Plenum Publishers, 2003. Optionally the gel layer can comprise a gelation controller or inhibitor. This reduces the texture degradation that normally occurs when a gel is stored hot in its liquid state for a longer time, or when it is cooled down and then reheated.

Preferably each gel layer has a thickness of between 2 and 5 mm. A gel layer which is too thin makes the peeling difficult, since the gel layer may rupture. A gel layer which is too thick is not desirable as it is more difficult to peel, and because of the relatively high sugar content of the gel which has a negative impact on the nutritional characteristics of the product.

It should also be noted that the gel layer does not have to cover the core completely, but may cover only a part or parts of the product.

The frozen confection with a gel coating can be produced with a method for manufacturing comprising the following steps:
- filling a first gel mix into a mould, freezing the gel mix so that it forms a first frozen gel coating in the mould and sucking off the unfrozen gel mix,
- optionally filling a second gel mix into a mould, freezing the gel mix so that it forms a second frozen gel coating in the mould and sucking off the unfrozen jelly mix, thereby obtaining a shell consisting of two frozen gel coatings,
- filling a third mix forming the core consisting of a frozen confection into said shell,
- inserting a stick into the core of the frozen confection.
- optionally adding additional gel layer
Freezing the product sufficiently hard to hold the stick firmly and de-moulding the product.

In a further embodiment of the invention the cutting line does not extend through the complete gel coating. In particular, it is possible that the depth of the cutting line or lines corresponds to the thickness of an outer gel coating. In this case, the gel coating can be peeled off partially, i.e. only the outer gel coating can be peeled off, while the inner gel layer, which is not provided with any cutting lines, remains intact.

It should be noted that, although the cutting lines preferably extend through the entire gel coating, so that it can be peeled off entirely, they can also only cut through an outer gel layer, leaving an inner gel layer intact. This results then in a product where only the outer gel layer can be peeled off, revealing an inner gel layer (having preferably a different color).

The frozen confection forming the core can comprise ice cream, milk ice, water ice, sherbet, sorbet or a gel.

In a desirable design to facilitate the peeling, four longitudinal cutting lines are provided in the gel layer, so that four flaps of peel can be peeled off. One thereby achieves a banana-style peeling effect. The number of flaps may vary e.g. being 3 to 5 or more for different product designs.

Alternatively, the frozen confectionery product may be produced by extruding the core and then adding the gel coating(s) by dipping, enrobing or spraying.

### EXAMPLES

By way of example and not limitation, the following examples are illustrative of various embodiments of the present disclosure.

Several examples of the process of the invention will be given to demonstrate the invention and variants of it. If not otherwise stated, the application of the cuts applies for peelable sticks of generally cylindrical shape. It further applies to products situated at an industrial production line. If not stated otherwise, the coating dip tank on the line has been replaced by set of knife assemblies as described in detail in the examples below.

### Example 1

A product is manufactured according to the known process of shell & core on an industrial production line. The shell consists of a gel containing 0.3% of locust bean gum, 0.4% of carraagheenan, 25% sucrose, color and flavoring, the remainder being water. The core material consists of a standard vanilla ice cream. The shell thickness is adjusted to 4 mm and a portion of the gel is filled into the mold after the core material has been filled to create a cap of gel material. A wooden stick has been inserted and the product is hard frozen inside the mold. At the point of extraction of the product from the mold, the temperature of the liquid used to warm up the mold prior to extraction is adjusted from the regular 20 °C to 40 °C. The product is pulled out of the mold and subsequently pushed into the cutting assembly consisting of 4 knives arranged in equal distance to each other in the frame. The product is further pushed into the end knife consisting of a cross-shaped knife. Both the end knives and the side knife generates 4 mm deep cuts which are aligned to each other. The product is retracted from the cutting assembly and subsequently packed.

Fig. 1 shows a coating cutter with a set of the side knives into which the product (1) is introduced and subsequently retracted. The number of side knives (3) can be two or more. Typically, the number of knives is 4. The knives consist of sharp blades with a pointed or rounded end, that reach through the skin layer of the product (1) up to the core layer. The blades are fixed statically to the frame in a horizontal orientation and the product is pushed into the product void (7) until the desired length of the cut is achieved. Upon retraction, the knives remain static and positioned inside the previously cut groove of the shell layer. The figures show a side view of product (1) hold on the stick (2) by a gripper (11). The side knives (3) are static and reach into the skin layer. The end knife (6) is located beneath the product (1). Also shown is a schematic top view showing 4 side knives (3) and the cross shaped end knife (6) which are aligned to each other.

To apply the end cuts, the end knives are fixed beneath the side knives. When the product is pushed into the side knife assembly and approaching the end point of the down movement, the end of the product is pushed into the end knives at a depth of 4 mm, corresponding to the thickness of the jelly layer. The product is then retracted and moved on to the packing station.

### Example 2

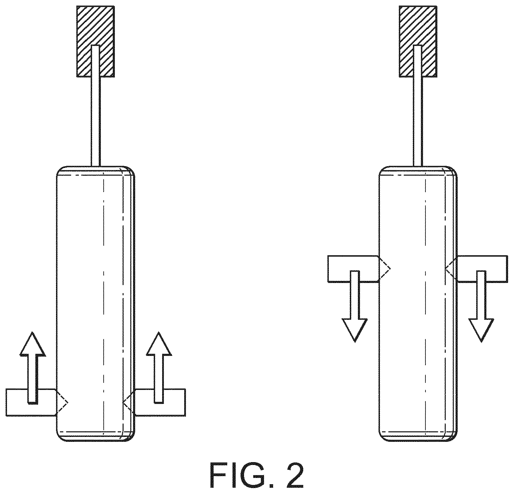

The embodiment of the invention shown in Fig. 2 relates to the movement of the knife assembly along the product axis while applying the cuts. In this example, the product as described in fig 1 is not lowered into the coating cutter. Instead, the coating cutter is raised to become inserted into the static product. After application of the cut, the coating cutter is retracted back down. The advantage of this set-up consists in eliminating the need to forcefully lower and raise the product, thereby avoiding any mechanical stress on the production line.

### Example 3

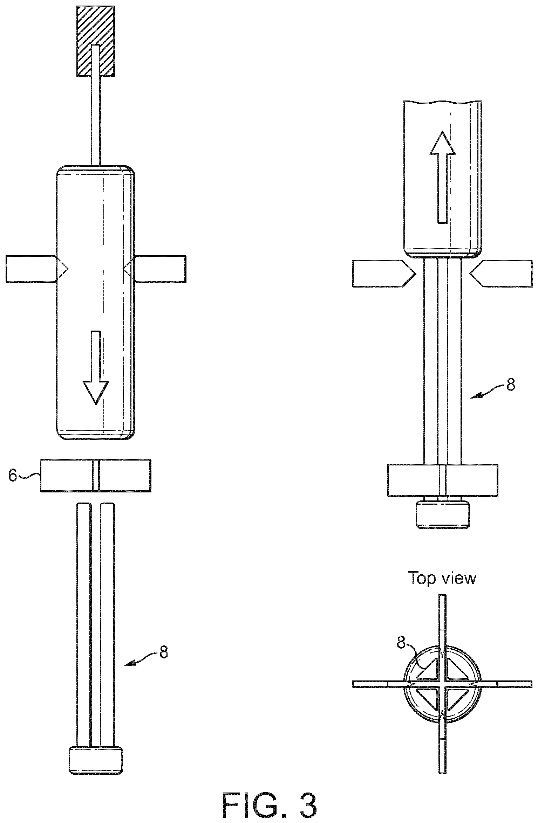

The embodiment of the invention shown in Fig. 3 relates to a coating cutter comprising a mechanism for removing products that get accidentally stuck inside the coating cutter during the cutting process. One or more rods or plungers (8) are located at the bottom of the coating cutter, beneath the end cutter (6). Once the product has been introduced into the coating cutter and is being retracted, said rods or plungers are pushed upwards by an actuator, following the retracting product. Products that get stuck inside the knife assembly or product parts remaining inside the assembly are then pushed out by the rod(s), clearing the coating cutting tool for the next product. The rods' pushing action may be activated on demand by a manual switch or can be automatically applied at each cutting cycle.

### Example 4

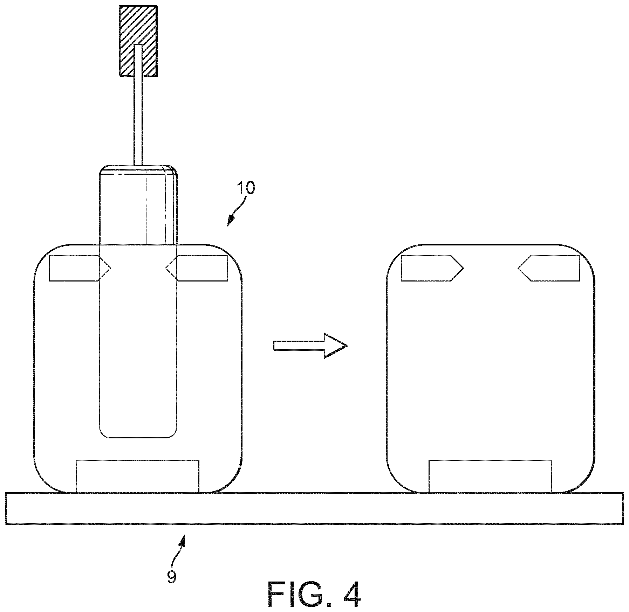

The embodiment of the invention shown in Fig. 4 demonstrates to a further mechanism to facilitate removal of products that got stuck inside the coating cutting tool during cutting. This mechanism comprises the installation of the coating cutter (10) on a short rail (9). Using an air cylinder or another actuator, this mechanism allows to push away the coating cutting tool from the path of the products' up/down movement. The coating cutting tool can then conveniently be cleared before being pushed back to the original position.

## Claims

1. An assembly for cutting a coating of a frozen confection (1) comprising a coating cutting tool (10) comprising
a frame defining a product void (7) for receiving a frozen confection at least partly coated and comprising a stick (2),
a product funnel to direct the product to a central position in the product void,
a set of side knives comprising at least 2 knives (3) statically fixed on opposite sides of the product void (7) and
at least one gripper (11) to hold the product by the stick during the cutting of the coating, said gripper (11) comprising a blocking member that limits the distance by which the stick can be pushed into the gripper (11) and prevents the frozen confection's edible portion from touching the gripper (11) when pressure is applied onto the product by the static knives (3).

2. An assembly according to claim 1, further comprising an end knife (6) for cutting the coating on the end of the frozen confection.

3. An assembly according to claims 1 or 2, further comprising a side guide (4) to keep the product in a central position inside the product void (7).

4. An assembly according to any of the preceding claims, wherein
the statically fixed knives (3) are at position with a constant distance between them.

5. A method for cutting a coating on a frozen confection comprising
providing an assembly according to any of the preceding claims,
providing a frozen confection (1) being at least partly coated and comprising a stick (2),
preparing the product for the cutting by warming the coating of the frozen confection to soften it,
fixing the stick of the frozen confection by means of the gripper (11),
inserting the frozen confection into the product void (7) by providing a relative movement between the cutting tool (10) and the product (1) while cutting coating of the frozen confection by means of the static knives (3).

6. A method according to claim 5, wherein the coating is a gel coating.

7. A method according to claims 5 or 6, where the gel coating has a total solid content from 20 to 45% based on weight of the gel (wt) and comprises 0.2 to 2 % wt of a gelling agent.

8. A method according to claims 5 or 7, wherein the product (1) remains static during the cutting step and the cutting unit is lifted up and retracted from the product while applying the cuts.

9. A method according to claims 5 to 8, wherein the product is molded in a mold and the mold is warmed up by spraying warm liquid onto the outside of the mold to a degree that allows both to extract the product from the mould and softens the gel coating enough to allow smooth cutting, by increasing the temperature of the liquid to a level between 20°C to 80°C.

10. A method according to claims 5 to 8, wherein the coating is softened by dipping the product in water or warming the product shell with air.

11. A method according to claims 5 to 10, wherein the coating cutting assembly is equipped with a plunger (8) to push up and out of the coating cutting assembly products that get stuck inside.

12. A method according to claims 5 to 11, wherein the coating cutting assembly is moved sideways and out of the way of the products in case of a product getting stuck in the coating cutting assembly.

13. A method according to claims 5 to 12, wherein the gripper (11) by which the product (1) is pulled out from the mold and pushed into the cutting assembly is equipped with a blocking member (12).

## Patentansprüche

1. Anordnung zum Schneiden einer Beschichtung eines gefrorenen Konfekts (1) umfassend ein Beschichtungsschneidwerkzeug (10), umfassend
einen Rahmen, der einen Produkthohlraum (7) zum Aufnehmen eines gefrorenen Konfekts definiert, das mindestens teilweise beschichtet ist und einen Stiel (2) umfasst,
einen Produkttrichter, um das Produkt in eine zentrale Position im Produkthohlraum zu führen,
einen Satz von Seitenmessern, die mindestens zwei Messer (3) umfassen, die statisch an gegenüberliegenden Seiten des Produkthohlraums (7) befestigt sind, und
mindestens einen Greifer (11) zum Halten des Produkts durch den Stiel während des Schneidens der Beschichtung, wobei der Greifer (11) ein Sperrglied umfasst, das den Abstand begrenzt, um den der Stiel in den Greifer (11) geschoben werden kann, und verhindert, dass der essbare Abschnitt des gefrorenen Konfekts den Greifer (11) berührt, wenn von den statischen Messern (3) Druck auf das Produkt ausgeübt wird.

2. Anordnung nach Anspruch 1, ferner umfassend ein Endmesser (6) zum Schneiden der Beschichtung am Ende des gefrorenen Konfekts.

3. Anordnung nach Anspruch 1 oder 2, ferner umfassend eine Seitenführung (4), um das Produkt in einer zentralen Position innerhalb des Produkthohlraums (7) zu halten.

4. Anordnung nach einem der vorstehenden Ansprüche, wobei sich die statisch fixierten Messer (3) in einer Position mit einem konstanten Abstand zwischen ihnen befinden.

5. Verfahren zum Schneiden einer Beschichtung auf einem gefrorenen Konfekt, umfassend
Bereitstellen einer Anordnung nach einem der vorstehenden Ansprüche,
Bereitstellen eines gefrorenen Konfekts (1), das mindestens teilweise beschichtet ist und einen Stiel (2) umfasst,
Vorbereiten des Produkts für das Schneiden durch Erwärmen der Beschichtung des gefrorenen Konfekts, um sie zu erweichen,
Befestigen des Stiels des gefrorenen Konfekts mittels des Greifers (11), Einführen des gefrorenen Konfekts in den Produkthohlraum (7) durch Bereitstellen einer relativen Bewegung zwischen dem Schneidwerkzeug (10) und dem Produkt (1) unter Schneiden der Beschichtung des gefrorenen Konfekts mittels der statischen Messer (3).

6. Verfahren nach Anspruch 5, wobei die Beschichtung eine Gelbeschichtung ist.

7. Verfahren nach einem der Ansprüche 5 bis 6, wobei die Gelbeschichtung einen Gesamtfeststoffgehalt von 20 bis 45 Gew.-%, bezogen auf das Gewicht des Gels (Gew.), aufweist und zu 0,2 bis 2 Gew.-% ein Geliermittel umfasst.

8. Verfahren nach Anspruch 5 oder 7, wobei das Produkt (1) während des Schneideschritts statisch bleibt und die Schneideinheit angehoben und von dem Produkt zurückgezogen wird, während die Schnitte angewendet werden.

9. Verfahren nach den Ansprüchen 5 bis 8, wobei das Produkt in einer Form geformt wird und die Form erwärmt wird, indem warme Flüssigkeit auf die Außenseite der Form gespritzt wird, um sowohl das Produkt aus der Form zu extrahieren als auch die Gelbeschichtung ausreichend zu erweichen, um ein leichtes Schneiden zu ermöglichen, indem die Temperatur der Flüssigkeit auf einen Wert zwischen 20 °C und 80 °C erhöht wird.

10. Verfahren nach den Ansprüchen 5 bis 8, wobei die Beschichtung durch Eintauchen des Produkts in Wasser oder Erwärmen der Produkthülle mit Luft erweicht wird.

11. Verfahren nach den Ansprüchen 5 bis 10, wobei die Beschichtungsschneidanordnung mit einem Kolben (8) ausgestattet ist, um Produkte, die im Inneren stecken bleiben, nach oben und aus der Beschichtungsschneidanordnung zu schieben.

12. Verfahren nach den Ansprüchen 5 bis 11, wobei die Beschichtungsschneidanordnung zugunsten eines Produkts, das in der Beschichtungsschneidanordnung stecken bleibt, seitwärts und aus dem Weg der Produkte bewegt wird.

13. Verfahren nach den Ansprüchen 5 bis 12, wobei der Greifer (11), durch den das Produkt (1) aus der Form herausgezogen und in die Schneidanordnung geschoben wird, mit einem Blockierelement (12) ausgestattet ist.

## Revendications

1. Ensemble pour découper un enrobage d'une confiserie congelée (1) comprenant un outil de découpe d'enrobage (10) comprenant
un cadre définissant une cavité de produit (7) pour recevoir une confiserie congelée au moins partiellement enrobée et comprenant un bâton (2),
un entonnoir à produit pour diriger le produit vers une position centrale dans la cavité de produit,
un ensemble de couteaux latéraux comprenant au moins 2 couteaux (3) fixés de façon statique sur des côtés opposés de la cavité de produit (7) et
au moins un organe de préhension (11) pour maintenir le produit par le bâton pendant la découpe de l'enrobage, ledit organe de préhension (11) comprenant un élément de blocage qui limite la distance selon laquelle le bâton peut être poussé dans l'organe de préhension (11) et empêche la partie comestible de la confiserie congelée de toucher l'organe de préhension (11) lorsqu'une pression est appliquée sur le produit par les couteaux statiques (3).

2. Ensemble selon la revendication 1, comprenant en outre un couteau d'extrémité (6) pour couper l'enrobage à l'extrémité de la confiserie congelée.

3. Ensemble selon les revendications 1 ou 2, comprenant en outre un guide latéral (4) pour maintenir le produit dans une position centrale à l'intérieur de la cavité de produit (7).

4. Ensemble selon l'une quelconque des revendications précédentes, dans lequel les couteaux fixés de façon statique (3) sont à une position avec une distance constante entre eux.

5. Procédé de découpe d'un enrobage sur une confiserie congelée, comprenant
la fourniture d'un ensemble selon l'une quelconque des revendications précédentes,
la fourniture d'une confiserie congelée (1) étant au moins partiellement enrobée et comprenant un bâton (2),
la préparation du produit pour la découpe en réchauffant l'enrobage de la confiserie congelée pour le ramollir,
la fixation du bâton de la confiserie congelée au moyen de l'organe de préhension (11),
l'insertion de la confiserie congelée dans la cavité de produit (7) en réalisant un mouvement relatif entre l'outil de coupe (10) et le produit (1) tout en découpant la confiserie congelée au moyen des couteaux statiques (3).

6. Procédé selon la revendication 5, dans lequel l'enrobage est un enrobage de gel.

7. Procédé selon les revendications 5 ou 6, où l'enrobage de gel a une teneur totale en solides allant de 20 à 45 % sur la base du poids du gel (wt) et comprend 0,2 à 2 % en poids d'un agent gélifiant.

8. Procédé selon les revendications 5 ou 7, dans lequel le produit (1) demeure statique pendant l'étape de découpe et l'unité de découpe est soulevée et rétractée du produit tout en appliquant les découpes.

9. Procédé selon les revendications 5 à 8, dans lequel le produit est moulé dans un moule et le moule est réchauffé par pulvérisation de liquide chaud sur l'extérieur du moule à un degré qui permet à la fois d'extraire le produit du moule et de ramollir l'enrobage de gel suffisamment pour permettre une découpe régulière, en augmentant la température du liquide à un niveau entre 20 °C et 80 °C.

10. Procédé selon les revendications 5 à 8, dans lequel l'enrobage est ramolli en immergeant le produit dans de l'eau ou en réchauffant la coque de produit avec de l'air.

11. Procédé selon les revendications 5 à 10, dans lequel l'ensemble de découpe d'enrobage est équipé d'un piston (8) pour pousser, vers le haut et vers l'extérieur de l'ensemble de découpe d'enrobage, des produits qui restent coincés à l'intérieur.

12. Procédé selon les revendications 5 à 11, dans lequel l'ensemble de découpe d'enrobage est déplacé latéralement et à l'écart des produits dans le cas d'un produit qui se coince dans l'ensemble de découpe d'enrobage.

13. Procédé selon les revendications 5 à 12, dans lequel l'organe de préhension (11) par lequel le produit (1) est extrait du moule et poussé dans l'ensemble de découpe est équipé d'un élément de blocage (12).
